(19) Europäisches Patentamt / European Patent Office / Office européen des brevets

(11) **EP 4 431 537 A1**

(12) **EUROPEAN PATENT APPLICATION**
published in accordance with Art. 153(4) EPC

(43) Date of publication:
**18.09.2024  Bulletin 2024/38**

(21) Application number: **22903748.6**

(22) Date of filing: **18.03.2022**

(51) International Patent Classification (IPC):
**C08F 297/04** (2006.01)    **C08L 53/00** (2006.01)

(52) Cooperative Patent Classification (CPC):
**C08F 297/04; C08L 53/00; C08L 53/02**

(86) International application number:
**PCT/JP2022/012791**

(87) International publication number:
**WO 2023/105810 (15.06.2023 Gazette 2023/24)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **06.12.2021   JP 2021198110**

(71) Applicant: **Denka Company Limited**
**Tokyo 103-8338 (JP)**

(72) Inventors:
• **NAKAMURA, Yuya**
**Tokyo 103-8338 (JP)**
• **SAWASATO, Tadashi**
**Tokyo 103-8338 (JP)**
• **YOSHIDA, Jun**
**Tokyo 103-8338 (JP)**

(74) Representative: **Gulde & Partner**
**Patent- und Rechtsanwaltskanzlei mbB**
**Wallstraße 58/59**
**10179 Berlin (DE)**

(54) **BLOCK COPOLYMER, COMPOSITION, HEAT SHRINKABLE FILM, SHEET AND SHEET MOLDED ARTICLE**

(57)     The present invention aims to provide a block copolymer having a high tensile elongation value and a few gels.

According to the present invention, provided is a block copolymer having a first vinyl aromatic block (S1), a second vinyl aromatic block (S2), and a copolymerization block (B/S), wherein: the first vinyl aromatic block (S1) is substantially composed exclusively of a vinyl aromatic monomer unit; the second vinyl aromatic block (S2) is substantially composed exclusively of the vinyl aromatic monomer unit; a weight average molecular weight of the second vinyl aromatic block (S2) is equal to or less than a weight average molecular weight of the first vinyl aromatic block (S1); the copolymerization block (B/S) is substantially composed exclusively of the vinyl aromatic monomer unit and a conjugated diene monomer unit; a content ratio of the conjugated diene monomer unit in the copolymerization block is 55 mass% or more and 82 mass% or less; a ratio of the first vinyl aromatic block is 50 mass% or more and 85 mass% or less when a total of masses of the first vinyl aromatic block and the second vinyl aromatic block is taken as 100 mass%; a content ratio of the copolymerization block in the block copolymer is 38 mass% or more and 60 mass% or less; and the block copolymer has at least one peak of a loss tangent value ($\tan\delta$) in a range of -70 to -35°C when a dynamic viscoelasticity measurement is performed under conditions of a temperature increase rate of 4°C/min, a frequency of 1 Hz, and a strain of 0.02% in accordance with ISO6721-1.

EP 4 431 537 A1

**Description**

**Technical Field**

The present invention relates to a block copolymer, a composition, a heat shrinkable film, a sheet, and a sheet molded article.

**Background Art**

A heat-shrinkable film using a block copolymer obtained by polymerizing a vinyl aromatic compound and a conjugated diene compound has superior heat-shrinkability and finishability after shrinkage, and can handle various shapes and attachment methods of a packaged object. Therefore, it is widely used for shrink packaging. It is also superior in that it does not pose the environmental pollution problems when disposed of, unlike polyvinyl chloride. For example, a heat-shrinkable film using a composition containing a block copolymer of styrene and butadiene is disclosed in Patent Literature 1.

The above-described block copolymer is also used for a sheet and a molded article thereof. For example, the method of adding the block copolymer to a polystyrene resin, a poly(styrene-methyl methacrylate) copolymer resin or the like is widely used for a molded article such as a food container to improve impact resistance when dropped.

**Citation List**

**Patent Literature**

[Patent Literature 1] JP-A-Hei11-158241

**Summary of Invention**

**Technical Problem**

For a heat-shrinkable film or sheet, and a molded article thereof, impact resistance and breakage resistance are important characteristics, and the tensile elongation of the block copolymer which is a raw material or the composition containing the block copolymer is used as an indicator thereof. However, for the block copolymer with good tensile elongation and the composition thereof, there has been a problem that gels are likely to be generated (fisheyes are likely to be generated when made into a film, sheet, or the like) . Therefore, the coexistence of good tensile elongation and a few gels was desired.

The present invention has been made by taking such a problem into consideration, and aims to provide a block copolymer having a high tensile elongation value, which is an indicator of mechanical strength and good appearance, and a few gels as well. Further, the present invention also aims to provide a composition containing the block copolymer, as well as to provide a sheet, a film, and a heat-shrinkable film, having high impact strength, high tensile elongation, and excellent appearance due to a few fisheyes, in which the block copolymer is used as a raw material.

**Solution to Problem**

According to the present invention, provided is a block copolymer having a first vinyl aromatic block (S1), a second vinyl aromatic block (S2), and a copolymerization block (B/S), wherein: the first vinyl aromatic block (S1) is substantially composed exclusively of a vinyl aromatic monomer unit; the second vinyl aromatic block (S2) is substantially composed exclusively of the vinyl aromatic monomer unit; a weight average molecular weight of the second vinyl aromatic block (S2) is equal to or less than a weight average molecular weight of the first vinyl aromatic block (S1); the copolymerization block (B/S) is substantially composed exclusively of the vinyl aromatic monomer unit and a conjugated diene monomer unit; a content ratio of the conjugated diene monomer unit in the copolymerization block is 55 mass% or more and 82 mass% or less; a ratio of the first vinyl aromatic block (S1) is 50 mass% or more and 85 mass% or less when a total of masses of the first vinyl aromatic block (S1) and the second vinyl aromatic block (S2) is taken as 100 mass%; a content ratio of the copolymerization block in the block copolymer is 38 mass% or more and 60 mass% or less; and the block copolymer has at least one peak of a loss tangent value (tanδ) in a range of -70 to -35°C when a dynamic viscoelasticity measurement is performed under conditions of a temperature increase rate of 4°C/min, a frequency of 1 Hz, and a strain of 0.02% in accordance with ISO6721-1.

The weight average molecular weight of the first vinyl aromatic block (S1) is preferably 30000 to 100000.

When the total mass of the vinyl aromatic monomer unit and the conjugated diene monomer unit in the block copolymer is taken as 100 mass%, the ratio of the vinyl aromatic monomer unit in the block copolymer is preferably 64 mass% or more and 75 mass% or less.

Hereinafter, various embodiments of the present invention will be exemplified. The embodiments shown below can be combined with each other.

Preferably, the copolymerization block (B/S) is a random copolymerization block of the vinyl aromatic monomer unit and the conjugated diene monomer unit.

Preferably, the block copolymer is linear-chain, and the arrangement of the polymerization blocks is (S1)-(B/S)-(S2) or (S2)-(B/S)-(S1).

According to another perspective of the present invention, provided is a composition further containing a polymer different from the block copolymer.

Preferably, the content ratio of the block copolymer is 15 mass% or more and 85 mass% or less.

According to another perspective of the present invention, provided is a heat-shrinkable film comprising a layer constituted of the composition.

According to another perspective of the present invention, provided is a sheet comprising a layer constituted of the composition.

According to another perspective of the present invention, provided is a molded article obtained by molding the sheet.

**Description of Embodiments**

Hereinafter, embodiments of the present invention will be explained. Various distinctive features shown in the following embodiments can be combined with each other. In addition, an invention can be established independently for each of the distinctive features.

1-1. Block Copolymer

The block copolymer according to one embodiment of the present invention has a first vinyl aromatic block (S1), a second vinyl aromatic block (S2), and a copolymerization block (B/S).

The block copolymer is preferably a linear-chain block copolymer. The linear-chain block copolymer preferably has the first vinyl aromatic block (S1) at one end and the second vinyl aromatic block (S2) at the other end. The linear-chain block copolymer preferably has an arrangement of polymerization blocks represented by (S1)-(B/S)-(S2) or (S2)-(B/S)-(S1), in which the blocks are connected in the order of the first vinyl aromatic block - the copolymerization block - the second vinyl aromatic block, or in the reverse order.

When the total of the masses of the first vinyl aromatic block and the second vinyl aromatic block contained in the block copolymer is taken as 100 mass%, the ratio of the first vinyl aromatic block (mass of the first vinyl aromatic block / (mass of the first vinyl aromatic block + mass of the second vinyl aromatic block) $\times$ 100) is 50 to 85 mass%. In other words, the ratio of the second vinyl aromatic block (mass of the second vinyl aromatic block / (mass of the first vinyl aromatic block + mass of the second vinyl aromatic block) $\times$ 100) is 15 to 50 mass%. When the ratio of the first vinyl aromatic block is within such a range, tensile elongation is likely to be good, and impact resistance and heat shrinkage rate are likely to be good when the block copolymer is used as a raw material for a heat-shrinkable film. It should be noted that, when the weight average molecular weights of the two vinyl aromatic blocks are the same (when they cannot be distinguished after the copolymerization block of the block copolymer is decomposed to be divided into the blocks), the ratio can be treated as being 50 mass% (mass ratio of the two blocks is 50/50).

The content ratio of the copolymerization block in the block copolymer is 38 mass% or more and 60 mass% or less, and preferably 40 mass% or more and 55 mass% or less. When the content ratio of the copolymerization block is within such a range, the balance between tensile elongation and suppression of gel generation (fisheye) is likely to be good, and the impact resistance when used as a raw material for a heat-shrinkable film is also likely to be good.

When the total mass of the vinyl aromatic monomer unit and the conjugated diene monomer unit in the block copolymer is taken as 100 mass%, the ratio of the vinyl aromatic monomer unit in the block copolymer is preferably 64 to 75 mass%, and more preferably 68 to 72 mass%. When the ratio of the vinyl aromatic monomer unit in the block copolymer is within such a range, the balance between tensile elongation and suppression of gel generation (fisheye) is likely to be good, and the impact resistance and blocking resistance when used as a raw material for a heat-shrinkable film is also likely to be good.

The weight average molecular weight of the block copolymer is preferably 100000 to 200000. Thereby, the molding processability when molding a film or sheet is likely to be good, while ensuring physical properties such as tensile elongation.

The block copolymer may be a mixture of two or more types of block copolymers that meet the above-described requirements, and may contain other components to the extent that they do not impair the effect of the present invention.

The other components are, for example, heat-inactivated materials, coupling materials, or additives generated during the production of the above-described block copolymer.

1-2. First Vinyl Aromatic Block

The first vinyl aromatic block is substantially composed exclusively of the vinyl aromatic monomer unit. The description "substantially composed exclusively of the vinyl aromatic monomer unit" means that the content ratio of the vinyl aromatic monomer unit is 98 mass% when the weight of the first vinyl aromatic block is 100 mass%, and 2 mass% or less of an unintended monomer unit may exist. Hereinafter, when the description "substantially composed exclusively of" is used, it is understood as what represents the same meaning described above. For the first vinyl aromatic block, when the weight of the first vinyl aromatic block is taken as 100 mass%, the content ratio of the vinyl aromatic monomer unit is more preferably 99 mass% or more, and even more preferably 100 mass%.

The vinyl aromatic monomer unit is a unit derived from the vinyl aromatic monomer used in polymerization. The vinyl aromatic monomer is a monomer having a vinyl group bonded to an aromatic ring. Examples of the vinyl aromatic monomer unit include vinyl aromatic hydrocarbon monomers such as styrene, o-methylstyrene, p-methylstyrene, p-tert-butylstyrene, 2,4-dimethylstyrene, 2,5 dimethylstyrene, $\alpha$-methylstyrene, vinylnaphthalene, and vinylanthracene. In one aspect, the vinyl aromatic monomer is preferably styrene. One of these monomers may be used alone, or two or more of these may be used in combination.

The weight average molecular weight of the first vinyl aromatic block is preferably 30000 or more and 100000 or less, and preferably 35000 or more and 70000 or less. The weight average molecular weight of the first vinyl aromatic block is equal to or more than the weight average molecular weight of the second vinyl aromatic block. Thereby, transparency when used as a raw material for a heat-shrinkable film or sheet is likely to be good.

1-3. Second Vinyl Aromatic Block

The second vinyl aromatic block is substantially composed exclusively of the vinyl aromatic monomer unit. For the second vinyl aromatic block, when the weight of the second vinyl aromatic block is taken as 100 mass%, the content ratio of the vinyl aromatic monomer unit is more preferably 99 mass% or more, and even more preferably 100 mass%. For the vinyl aromatic monomer unit, the description is the same as for the first aromatic vinyl block. Further, the weight average molecular weight of the second vinyl aromatic block is equal to or less than the weight average molecular weight of the first vinyl aromatic block.

1-4. Copolymerization Block

The copolymerization block is substantially composed exclusively of the vinyl aromatic monomer unit and the conjugated diene monomer unit. For the copolymerization block, when the weight of the copolymerization block is taken as 100 mass%, the amount of the vinyl aromatic monomer unit and the conjugated diene monomer unit is more preferably 99 mass% or more in total, and even more preferably 100 mass% in total.

The content ratio of the conjugated diene monomer unit in the copolymerization block is 55 mass% or more and 82 mass% or less, and preferably 60 mass% or more and 80 mass% or less, when the total mass of the monomer units constituting the copolymerization block is taken as 100 mass%. When the content ratio of the conjugated diene monomer unit is within such a range, the balance between tensile elongation and suppression of gel generation (fisheye) is likely to be good, and the impact resistance and blocking resistance when used as a raw material for a heat-shrinkable film is also likely to be good.

There are a tapered copolymerization block in which the compositions of the vinyl aromatic monomer unit and the conjugated diene monomer unit vary continuously, and a random copolymerization block in which the compositions of the vinyl aromatic monomer unit and the conjugated diene monomer unit are almost constant. In the present invention, the copolymerization block is preferably the random copolymerization block. The random copolymerization block is formed, for example, by continuously adding the vinyl aromatic monomer unit and the conjugated diene monomer unit to the polymerization system in a certain weight ratio. Since the compositions of the vinyl aromatic monomer unit and the conjugated diene monomer unit are almost constant in the random copolymerization block, there are no regions where the composition ratio of the conjugated diene monomer unit is locally high, and fisheye formation can be suppressed compared to the tapered copolymerization block. In addition, since there are no regions where the composition ratio of the conjugated diene monomer unit is locally low, the conjugated diene monomer unit can efficiently contribute to impact resistance and breakage resistance, leading to a good balance between these physical properties.

The conjugated diene monomer unit is a unit derived from the conjugated diene monomer used in polymerization. The conjugated diene monomer is a monomer having the chemical structure represented by C=C-C=C. Examples of the conjugated diene monomer include conjugated diene monomers such as 1,3-butadiene, 2-methyl-1,3-butadiene (isoprene), 2,3-dimethyl-1,3 butadiene, 1,3-pentadiene, and 1,3-hexadiene. In one aspect, the conjugated diene monomer is preferably 1,3-butadiene. One of these monomers may be used alone, or two or more of these may be used in combination.

The molecular weight of each block can be calculated based on the measurement of the weight average molecular weight of the block copolymer and the charged amount of each monomer. It may also be calculated based on the measurement of the weight average molecular weight of the block copolymer and the measurement of the weight average molecular weight after decomposition of the block copolymer.

For decomposition of the block copolymer, for example, the ozone decomposition method described in the known literature (Y. TANAKA, et. al., "RUBBER CHEMISTRY AND TECHNOLOGY", p. 16 (1985)) can be used. The first vinyl aromatic block and the second vinyl aromatic block that are composed exclusively of the vinyl aromatic monomer are not decomposed, and after decomposition, the molecular weights of the first vinyl aromatic block and the second vinyl aromatic block can each be measured, and their content ratios can also be calculated. Then, the weight average molecular weight and the content ratio of the copolymerization block can be calculated by subtracting the weight average molecular weights of the first vinyl aromatic block and the second vinyl aromatic block from the weight average molecular weight of the block copolymer before decomposition.

1-5. Composition

Preferably, the composition according to one embodiment of the present invention further contains a polymer (resin) different from the above-described block copolymer, in addition to the above-described block copolymer. Examples of the polymer different from the above-described block copolymer include a styrene-butadiene block copolymer different from the above-described block copolymer, polystyrene, and a poly(styrene-methyl methacrylate) copolymer. The block copolymer of the present invention has an excellent balance among impact resistance, breakage resistance, and fisheye suppression when used as a raw material for a heat-shrinkable film or a sheet. For example, by making it into the styrene-butadiene block copolymer having an excellent heat shrinkage rate of the heat-shrinkable film, or the composition with polystyrene having excellent rigidity, it is possible to obtain the heat-shrinkable film or sheet having much better balance among physical properties thereof.

The content ratio of the above-described block copolymer in the composition is preferably 15 mass% or more and 85 mass% or less, and more preferably 30 mass% or more and 70 mass% or less. The content ratio of the polymer different from the above-described block copolymer in the composition is not particularly limited. For example, it is 15 mass% or more and 85 mass% or less, and preferably 30 mass% or more and 70 mass% or less.

1-6. Physical Properties of Block Copolymer and Composition

The block copolymer has at least one peak of the loss tangent value (tan$\delta$) in the range of -70 to -35°C when the dynamic viscoelasticity measurement of the block copolymer is performed under conditions of a temperature increase rate of 4°C/min, a frequency of 1 Hz, and a strain of 0.02% in accordance with ISO6721-1. When the copolymerization block is a random copolymerization block and the content ratio of the conjugated diene monomer unit in the copolymerization block is within the above-described range, tan$\delta$ is likely to be in the above-described range, and the balance among impact resistance, breakage resistance, and blocking resistance is good, thereby suppressing fisheye generation. Preferably, the above-described composition containing the block copolymer also has at least one peak in the same range.

1-7. Production Method

The block copolymer according to one embodiment of the present invention can be synthesized by various methods. For example, it can be obtained by a living anionic polymerization reaction using an organolithium compound as a polymerization initiator in an organic solvent.

Examples of the organic solvent include aliphatic hydrocarbons such as butane, pentane, hexane, isopentane, heptane, octane, and isooctane; alicyclic hydrocarbons such as cyclopentane, methylcyclopentane, cyclohexane, methylcyclohexane, and ethylcyclohexane; and aromatic hydrocarbons such as benzene, toluene, ethylbenzene, and xylene. The use of cyclohexane is particularly preferred.

The organolithium compound is a compound with one or more lithium atoms bonded in a molecule. Examples of the organolithium compound include monofunctional organic lithium compounds such as ethyl lithium, n-propyl lithium, isopropyl lithium, n-butyl lithium, sec-butyl lithium, and tert-butyl lithium; and multifunctional organic lithium compounds such as hexamethylenedilithium, butadienyldilithium, and isoprenyldilithium. The use of n-butyl lithium is particularly preferred.

In the living anionic polymerization, a block copolymer having an arbitrary primary structure can be obtained by changing the addition amount and addition method of monomers (vinyl aromatic hydrocarbon monomer and conjugated diene monomer). For example, there is a method as follows. First, only vinyl aromatic monomers are added. After vinyl aromatic monomers are completely consumed, vinyl aromatic monomers and conjugated diene monomers are added simultaneously at a predetermined rate. After they are completely consumed, only vinyl aromatic monomers are added again for polymerization.

It is possible to control the physical properties of the block copolymer by thus changing the addition amount and addition method. For example, the molecular weight can be controlled by the ratio of organolithium compound to monomers, and the storage modulus and loss tangent (tan$\delta$) can be controlled by the ratio of the vinyl aromatic monomer unit to the conjugated diene monomer unit in each block chain.

The block copolymer thus obtained is deactivated by adding a polymerization inhibitor such as water, alcohol, and carbon dioxide in an amount sufficient to deactivate the active terminals. As a method of recovering the copolymer from the obtained block copolymer solution, an arbitrary method such as (A) a method of precipitating the copolymer with a poor solvent such as methanol, (B) a method of evaporating the solvent by a heating roll or the like to precipitate the copolymer (drum dryer method), (C) a method of removing the solvent by a vent extruder after concentration of the solution by a concentrator (devolatilization and extrusion method), and (D) a method of dispersing the solution in water and recovering the copolymer by heating and removing the solvent by blowing steam (steam stripping method) can be employed. In particular, the devolatilization and extrusion method is preferable.

The composition according to one embodiment of the present invention is obtained by mixing the block copolymer obtained by the above-described production method with other block copolymers, polymers, or additives as needed.

Examples of other additives include various stabilizers, lubricants, processing aids, blocking inhibitors, antistatic agents, antifogging agents, light resistance improvers, softeners, plasticizers, and pigments. Each additive may be added to the block copolymer solution, or blended with the recovered copolymer and melt-mixed.

Examples of the stabilizer include phenolic antioxidants such as 2-tert-butyl-6-(3-tert-butyl-2-hydroxy-5-methylbenzyl)-4-methy lphenylacrylate, 2-[1-(2-hydroxy-3,5-di-tert-pentylphenyl)ethyl]-4, 6-di-tert-pentylphenylacrylate, octadecyl-3-(3,5-di-tert-butyl-4-hydroxyphenyl)propionate, and 2,6-di-tert-butyl-4-methylphenol; and phosphorus antioxidants such as trisnonylphenylphosphite. Examples of the blocking inhibitor, the antistatic agent, and the lubricant include fatty acid amides, ethylenebisstearamides, sorbitan monostearates, saturated fatty acid esters of aliphatic alcohols, and pentaerythritol fatty acid esters. Preferably, the used amounts of these additives are 5 mass% or less with respect to the block copolymer.

The composition according to one embodiment of the present invention may contain a plurality of kinds of polymers, for example, the above-described block copolymer and other polymers. As a method of mixing these polymers, a known method can be employed. For example, they can be dry-blended with a Henschel mixer, ribbon blender, super mixer, V-blender, or the like, or further melted and pelletized by an extruder. In one aspect, melt-mixing is preferable. A method of removing the solvent after mixing polymer solutions with each other can also be used.

2. Heat-shrinkable Film/Sheet/Sheet Molded Article

The heat-shrinkable film or sheet according to one embodiment of the present invention comprises a layer constituted of the above-described composition.

A sheet ("sheet" can also be referred to as "film", but "sheet" will be used hereinafter to distinguish it from "heat-shrinkable film") can be obtained by extrusion using the above-described composition by a known method such as a T-die method and a tubular method.

The heat-shrinkable film can be obtained by uniaxial, biaxial, or multiaxial stretching of an extruded sheet. In particular, preferred is the method in which extrusion is performed by the T-die method for biaxial stretching.

The heat-shrinkable film or sheet according to one embodiment of the present invention may have a structure including only a layer constituted of the above-described composition, and can be made into a heat-shrinkable film or sheet with a multilayer structure by laminating another resin layer on at least one surface thereof. To achieve the multilayer structure of the heat-shrinkable film, another resin layer may be laminated to the layer constituted of the above-described composition after stretching, or another resin layer may be laminated to an unstretched film obtained by film forming of the above-described composition and be stretched, or a multilayer film obtained by laminating the above-described composition and another resin by multilayer extrusion molding may be stretched. A styrene-based resin is preferred as the resin used for another resin layer.

Examples of the uniaxial stretching include a method of stretching the extruded sheet in the direction perpendicular to the extrusion direction (TD) by a tenter, and a method of stretching the extruded tubular film in a circumferential direction.

Examples of the biaxial stretching include a method of stretching the extruded sheet in the extrusion direction (MD) and then stretching it in the direction perpendicular to the extrusion direction (TD) by a tenter or the like, and a method of stretching the extruded tubular sheet in the extrusion direction and in the circumferential direction simultaneously or separately.

For example, the stretching temperature is preferably 60 to 120°C. The sheet is less likely to break during stretching by setting the stretching temperature to 60°C or higher, and the heat shrinkage rate and thickness accuracy of the obtained film are likely to be good by setting the stretching temperature to 120°C or lower. The stretching ratio is not particularly limited, and preferably 1.5 to 8 times. The heat shrinkage rate is likely to be good by setting the stretching ratio to 1.5 times or higher, and the sheet is less likely to break during stretching by setting the stretching ratio to 8 times or lower. Preferably, the heat shrinkage rate needs to be 20% or higher at 80°C when the heat-shrinkable film is used as a heat-shrinkable label or packaging material. The heat shrinkage rate of lower than 20% is not preferable because it needs a high temperature in shrinkage and adversely affect the article to which the film is to be attached. The film thickness is preferably 10 to 300 um.

The heat-shrinkable film can be used as a heat-shrinkable label, a heat-shrinkable cap seal, or the like. In addition, it can be used as a packaging film or the like. By using such a heat-shrinkable film as a label, a container such as a PET bottle with the label attached thereto is obtained.

Further, the molded article according to one embodiment of the present invention is a molded article obtained by molding the sheet into an arbitrary shape.

**Examples**

Hereinafter, Examples are provided to further explain the present invention. These are all exemplary and do not limit the contents of the present invention.

[Production of Block Copolymer]

The block copolymers P1 to P8 were produced as Examples 1 to 4 and Comparative Examples 1 to 4 by the following operations (Table 1) .

<Polymerization of Block Copolymer P1>

(1) 500.0 kg of cyclohexane and 75.0 g of tetrahydrofuran (THF) were charged into a reaction vessel.
(2) 2000 mL of 10 mass% cyclohexane solution of n-butyl lithium was added thereto as a polymerization initiator solution and kept at 30°C.
(3) 20 kg of styrene was added and anionically polymerized. The internal temperature rose to 42°C.
(4) After styrene was completely consumed, the internal temperature of the reaction system was raised to 80°C, and then 40 kg of styrene and 60 kg of 1,3-butadiene were added simultaneously at constant addition rates of 40 kg/h and 60 kg/h, respectively, while keeping the internal temperature.
(5) After styrene and 1,3-butadiene were completely consumed, the internal temperature of the reaction system was lowered to 55°C, and then 80 kg of styrene was added collectively to anionically polymerize styrene. The internal temperature rose to 93°C.
(6) Finally, all polymerization active terminals were deactivated by water to obtain a polymerization liquid containing the block copolymer having a polystyrene block and a random block of styrene and butadiene.
(7) The polymerization liquid was devolatilized, and melted and pelletized with an extruder to obtain the block copolymer P1.

<Polymerization of Block Copolymer P2>

(1) 500.0 kg of cyclohexane and 75.0 g of tetrahydrofuran (THF) were charged into a reaction vessel.
(2) 2000 mL of 10 mass% cyclohexane solution of n-butyl lithium was added thereto as a polymerization initiator solution and kept at 30°C.
(3) 25.6 kg of styrene was added and anionically polymerized. The internal temperature rose to 45°C.
(4) After styrene was completely consumed, the internal temperature of the reaction system was raised to 80°C, and then 34.4 kg of styrene and 60 kg of 1,3-butadiene were added simultaneously at constant addition rates of 34.4 kg/h and 60 kg/h, respectively, while keeping the internal temperature.
(5) After styrene and 1,3-butadiene were completely consumed, the internal temperature of the reaction system was lowered to 55°C, and then 80 kg of styrene was added collectively to anionically polymerize styrene. The internal temperature rose to 93°C.

(6) Finally, all polymerization active terminals were deactivated by water to obtain a polymerization liquid containing the block copolymer having a polystyrene block and a random block of styrene and butadiene.

(7) The polymerization liquid was devolatilized, and melted and pelletized with an extruder to obtain the block copolymer P2.

<Polymerization of Block Copolymer P3>

(1) 500.0 kg of cyclohexane and 75.0 g of tetrahydrofuran (THF) were charged into a reaction vessel.

(2) 2000 mL of 10 mass% cyclohexane solution of n-butyl lithium was added thereto as a polymerization initiator solution and kept at 30°C.

(3) 50 kg of styrene was added and anionically polymerized. The internal temperature rose to 49°C.

(4) After styrene was completely consumed, the internal temperature of the reaction system was raised to 80°C, and then 40 kg of styrene and 60 kg of 1,3-butadiene were added simultaneously at constant addition rates of 40 kg/h and 60 kg/h, respectively, while keeping the internal temperature.

(5) After styrene and 1,3-butadiene were completely consumed, the internal temperature of the reaction system was lowered to 60°C, and then 50 kg of styrene was added collectively to anionically polymerize styrene. The internal temperature rose to 81°C.

(6) Finally, all polymerization active terminals were deactivated by water to obtain a polymerization liquid containing the block copolymer having a polystyrene block and a random block of styrene and butadiene.

(7) The polymerization liquid was devolatilized, and melted and pelletized with an extruder to obtain the block copolymer P3.

<Polymerization of Block Copolymer P4>

(1) 500.0 kg of cyclohexane and 75.0 g of tetrahydrofuran (THF) were charged into a reaction vessel.

(2) 2000 mL of 10 mass% cyclohexane solution of n-butyl lithium was added thereto as a polymerization initiator solution and kept at 30°C.

(3) 60 kg of styrene was added and anionically polymerized. The internal temperature rose to 56°C.

(4) After styrene was completely consumed, the internal temperature of the reaction system was raised to 80°C, and then 16 kg of styrene and 64 kg of 1,3-butadiene were added simultaneously at constant addition rates of 16 kg/h and 64 kg/h, respectively, while keeping the internal temperature.

(5) After styrene and 1,3-butadiene were completely consumed, the internal temperature of the reaction system was lowered to 60°C, and then 60 kg of styrene was added collectively to anionically polymerize styrene. The internal temperature rose to 81°C.

(6) Finally, all polymerization active terminals were deactivated by water to obtain a polymerization liquid containing the block copolymer having a polystyrene block and a random block of styrene and butadiene.

(7) The polymerization liquid was devolatilized, and melted and pelletized with an extruder to obtain the block copolymer P4.

<Polymerization of Block Copolymer P5>

(1) 500.0 kg of cyclohexane and 75.0 g of tetrahydrofuran (THF) were charged into a reaction vessel.

(2) 2000 mL of 10 mass% cyclohexane solution of n-butyl lithium was added thereto as a polymerization initiator solution and kept at 30°C.

(3) 4 kg of styrene was added and anionically polymerized. The internal temperature rose to 35°C.

(4) After styrene was completely consumed, the internal temperature of the reaction system was raised to 80°C, and then 51 kg of styrene and 7 kg of 1,3-butadiene were added simultaneously at constant addition rates of 153 kg/h and 21 kg/h, respectively, while keeping the internal temperature.

(5) After styrene and 1,3-butadiene were completely consumed, the internal temperature of the reaction system was lowered to 60°C, and then 46 kg of 1,3-butadiene was added collectively to anionically polymerize 1,3-butadiene. The internal temperature rose to 94°C.

(6) After 1,3-butadiene was completely consumed, the internal temperature of the reaction system was lowered to 65°C, and then 34 kg of styrene was added collectively to anionically polymerize styrene. The internal temperature rose to 79°C.

(7) Finally, all polymerization active terminals were deactivated by water to obtain a polymerization liquid containing the block copolymer having a polystyrene block, a polybutadiene block, and a random block of styrene and butadiene.

(8) The polymerization liquid was devolatilized, and melted and pelletized with an extruder to obtain the block copolymer P5.

<Polymerization of Block Copolymer P6>

(1) 500.0 kg of cyclohexane and 75.0 g of tetrahydrofuran (THF) were charged into a reaction vessel.

(2) 2000 mL of 10 mass% cyclohexane solution of n-butyl lithium was added thereto as a polymerization initiator solution and kept at 30°C.

(3) 74 kg of styrene was added and anionically polymerized. The internal temperature rose to 66°C.

(4) After styrene was completely consumed, the internal temperature of the reaction system was lowered to 45°C, and then 100 kg of 1,3-butadiene was added collectively to anionically polymerize 1,3-butadiene. The internal temperature rose to 112°C.

(5) After 1,3-butadiene was completely consumed, the internal temperature of the reaction system was lowered to 70°C, and then 26 kg of styrene was added collectively to anionically polymerize styrene. The internal temperature rose to 78°C.

(6) Finally, all polymerization active terminals were deactivated by water to obtain a polymerization liquid containing the block copolymer having a polystyrene block and a polybutadiene block.

(7) The polymerization liquid was devolatilized, and melted and pelletized with an extruder to obtain the block copolymer P6.

<Polymerization of Block Copolymer P7>

(1) 500.0 kg of cyclohexane and 75.0 g of tetrahydrofuran (THF) were charged into a reaction vessel.

(2) 2000 mL of 10 mass% cyclohexane solution of n-butyl lithium was added thereto as a polymerization initiator solution and kept at 30°C.

(3) 65 kg of styrene was added and anionically polymerized. The internal temperature rose to 54°C.

(4) After styrene was completely consumed, the internal temperature of the reaction system was raised to 80°C, and then 22 kg of styrene and 48 kg of 1,3-butadiene were added simultaneously at constant addition rates of 22 kg/h and 48 kg/h, respectively, while keeping the internal temperature.

(5) After styrene and 1,3-butadiene were completely consumed, the internal temperature of the reaction system was lowered to 60°C, and then 65 kg of styrene was added collectively to anionically polymerize styrene. The internal temperature rose to 86°C.

(6) Finally, all polymerization active terminals were deactivated by water to obtain a polymerization liquid containing the block copolymer having a polystyrene block and a random block of styrene and butadiene.

(7) The polymerization liquid was devolatilized, and melted and pelletized with an extruder to obtain the block copolymer P7.

<Polymerization of Block Copolymer P8>

(1) 500.0 kg of cyclohexane and 75.0 g of tetrahydrofuran (THF) were charged into a reaction vessel.

(2) 2000 mL of 10 mass% cyclohexane solution of n-butyl lithium was added thereto as a polymerization initiator solution and kept at 30°C.

(3) 10 kg of styrene was added and anionically polymerized. The internal temperature rose to 36°C.

(4) After styrene was completely consumed, the internal temperature of the reaction system was raised to 80°C, and then 16 kg of styrene and 64 kg of 1,3-butadiene were added simultaneously at constant addition rates of 16 kg/h and 64 kg/h, respectively, while keeping the internal temperature.

(5) After styrene and 1,3-butadiene were completely consumed, the internal temperature of the reaction system was lowered to 50°C, and then 110 kg of styrene was added collectively to anionically polymerize styrene. The internal temperature rose to 103°C.

(6) Finally, all polymerization active terminals were deactivated by water to obtain a polymerization liquid containing the block copolymer having a polystyrene block and a random block of styrene and butadiene.

(7) The polymerization liquid was devolatilized, and melted and pelletized with an extruder to obtain the block copolymer P8.

[Analysis of Block Copolymer]

<Content ratio of Vinyl Aromatic Monomer Unit and Conjugated Diene Monomer Unit>

The content ratio of the vinyl aromatic monomer unit (styrene) and the conjugated diene monomer unit (butadiene) in the block copolymer was measured and calculated by the following halogen addition method.

(A1) After dissolving the sample in a solvent (such as carbon tetrachloride) capable of completely dissolving the sample, an excess amount of iodine monochloride/carbon tetrachloride solution was added and allowed to react sufficiently, and the unreacted iodine monochloride was then titrated with sodium thiosulfate/ethanol solution to calculate the double bond amount.

(A2) The butadiene content ratio (rubber component) was calculated based on the double bond amount obtained by the method of (A1).

For the styrene content ratio, the value obtained by subtracting the butadiene content ratio from the whole sample was calculated as the styrene content ratio.

<Weight Average Molecular Weight and Content Ratio of Each Block>

The weight average molecular weight of each block was determined by the following formulas (1) to (3), using the weight average molecular weight of the block copolymer measured by GPC measurement (M) and the weight of the monomer charged at the time of polymerization of each block (W) [kg] . Further, the content ratio of each block was determined by the following formulas (B4) to (B6) .

(B1) (Weight average molecular weight of first vinyl aromatic block) = $M \times W1 / (W1+W2+W3)$

(B2) (Weight average molecular weight of second vinyl aromatic block) = $M \times W2 / (W1+W2+W3)$

(B3) (Weight average molecular weight of copolymerization block) = $M \times W3 / (W1+W2+W3)$

(B4) (Content ratio of first vinyl aromatic block) = $W1 / (W1+W2+W3) \times 100$ [%]

(B5) (Content ratio of second vinyl aromatic block) = $W2 / (W1+W2+W3) \times 100$ [%]

(B6) (Content ratio of copolymerization block) = $W3 / (W1+W2+W3) \times 100$ [%]

(W1: charged monomer weight of the first vinyl aromatic block [kg], W2: charged monomer weight of the second vinyl aromatic block [kg], W3: charged monomer weight of the copolymerization block [kg])

The weight average molecular weight of the first vinyl aromatic block and the second vinyl aromatic block can also be measured by GPC measurement after decomposition of the conjugated diene monomer unit by the ozone decomposition method described in the known literature (Y. TANAKA, et. al, "RUBBER CHEMISTRY AND TECHNOLOGY", p16 (1985)) . In that case, the weight average molecular weight of the copolymerization block is calculated by subtracting the weight average molecular weights of the first vinyl aromatic block and the second vinyl aromatic block from the weight average molecular weight of the block copolymer before decomposition measured by GPC measurement.

<GPC measurement>

The molecular weight of the block copolymer was measured using the following GPC measurement equipment and conditions, and calculated as a molecular weight in terms of polystyrene based on a calibration curve with standard polystyrene.

Equipment Name: HLC-8220GPC (made by Tosoh Corporation)
Column: ShodexGPCKF-404 (made by Showa Denko K.K.), 4 columns connected in series
Temperature: 40°C
Detection: differential refractive index
Solvent: tetrahydrofuran
Concentration: 2 mass%
Calibration Curve: prepared using standard polystyrene (made by Varian, Inc.)

<Ratio of Conjugated Diene Monomer Unit in Copolymerization Block>

The ratio of the conjugated diene monomer unit (butadiene) in the copolymerization block was calculated by the following formula (B7), using the "content ratio of copolymerization block" determined by the above-described formula (B6) and the "content ratio of conjugated diene monomer unit" in (A2) described above.

(Ratio of conjugated diene monomer unit in copolymerization block) = (Content ratio of conjugated diene monomer unit)/(Content ratio of copolymerization block) $\times$ 100 [%]

<Ratio of First Vinyl Aromatic Block: S1/(S1+S2)>

The ratio of the first vinyl aromatic block (S1) and the ratio of the second vinyl aromatic block (S2) when the total of masses of the first vinyl aromatic block and the second vinyl aromatic block contained in the block copolymer is taken as 100 mass%, i.e., "S1/(S1+S2)" and "S2/(S1+S2)" were each calculated using "content ratio of first vinyl aromatic block" in the above-described formula (B4) and "content ratio of second vinyl aromatic block" in the above-described formula (B5).

Ratio of first vinyl aromatic block = mass of first vinyl aromatic block/(mass of first vinyl aromatic block + mass of second vinyl aromatic block) $\times$ 100 [mass%].

<Measurement of Loss Tangent Value>

The loss tangent value (tan$\delta$) of the block copolymer was measured by the dynamic viscoelasticity measurement method using the following procedure.

(1) A molded product with a thickness of 4 mm and a width of 10 mm was fabricated by injection molding using pellets of the block copolymer, and a test piece with an appropriate size was cut from this molded product. It was stored in a room at 23°C at 50% RH for 48 h for curing treatment.
(2) The storage modulus (E') and the loss modulus (E") were measured in the temperature range from -120°C to 120°C using the dynamic viscoelasticity measurement equipment RSA III made by TA Instruments, Inc., under the conditions of a temperature increase rate of 4°C/min, a measurement frequency of 1 Hz, and a strain of 0.02%, in a fixed 3-point bending mode, in accordance with ISO 6721-1, and tan$\delta$ in the above-described temperature range was calculated using the following formula.

$$\tan\delta = E"/E'$$

\<Tensile Elongation\>

A nominal tensile strain at break was measured using an autograph AG-Xplus made by SHIMADZU CORPORATION at a tensile speed of 50 mm/min for a dumbbell-shaped molded piece injection-molded using pellets, in accordance with JIS K 7161. It was used as the value of tensile elongation.

\<Fisheye Level\>

The generation of gel in the block copolymer was evaluated as a fisheye level. The fisheye level was evaluated by making pellets of each block copolymer into a non-stretched sheet with a thickness of approximately 50 um in a sheet extruder equipped with a T-die, and by measuring the number of foreign substances having a size of 0.2 mm or more present in 3.3 $m^2$ using an image recognition device. The number of foreign substances was judged as "Bad" when the number was 300 or more, "Acceptable" when the number was 50 or more and less than 300, and "Good" when the number was less than 50. The evaluation results for Examples and Comparative Examples are each shown in Table 1. It should be noted that, for Comparative Example 2, a non-stretched sheet was prepared but molding work thereof was difficult and moldability was problematic.

[Table 1]

| Table 1 | | | Example | | | | Comparative Example | | | |
|---|---|---|---|---|---|---|---|---|---|---|
| | | | 1 | 2 | 3 | 4 | 1 | 2 | 3 | 4 |
| Structure of Block Copolymer | No. of Block Copolymer | - | P1 | P2 | P3 | P4 | P5 | P6 | P7 | P8 |
| | Polymer Block Arrangement | - | S2-(B/S)-S1 | S2-(B/S)-S1 | S1-(B/S)-S2 | S1-(B/S)-S2 | S-(S/B)-B-S | S-B-S | S1-(B/S)-S2 | S2-(B/S)-S1 |
| | Content of Vinyl Aromatic Monomer Unit in Block Copolymer | mass% | 70 | 70 | 70 | 68 | 70 | 50 | 76 | 68 |
| | Content of Conjugated Diene Monomer Unit in Block Copolymer | mass% | 30 | 30 | 30 | 32 | 30 | 50 | 24 | 32 |
| | Content of First Vinyl Aromatic Block | mass% | 40 | 40 | 25 | 30 | 60 | 37 | 33 | 55 |
| | Content of Second Vinyl Aromatic Block | mass% | 10 | 13 | 25 | 30 | 17 | 13 | 33 | 5 |
| | Content of Copolymerization Block | mass% | 50 | 47 | 50 | 40 | 23 | 50 | 34 | 40 |
| | Ratio of Conjugated Diene Monomer Unit in Copolymerization Block | mass% | 60 | 64 | 60 | 80 | 12 | - | 69 | 80 |
| | Ratio of First Vinyl Aromatic Block (S1/(S1+S2)) | mass% | 80 | 76 | 50 | 50 | 78 | 74 | 50 | 92 |
| | Weight Average Molecular Weight of First Vinyl Atomatic Block | - | 50000 | 50000 | 30000 | 35000 | 96000 | 30000 | 37000 | 62000 |
| | Weight Average Molecular Weight of Block Copolymer | - | 124000 | 124000 | 120000 | 116000 | 160000 | 80000 | 115000 | 113000 |

(continued)

| Table 1 | | | | Example | | | | Comparative Example | | | |
|---|---|---|---|---|---|---|---|---|---|---|---|
| | | | | 1 | 2 | 3 | 4 | 1 | 2 | 3 | 4 |
| Physical Property of Block Copolymer | Tensile Elongation | | % | 230 | 360 | 460 | 630 | 80 | - | 80 | 20 |
| | Peak Temperature of tan$\delta$ | | °C | -38 | -44 | -41 | -68 | -87 | -93 | -42 | -65 |
| | Fisheye Level | Number of Foreign Substances (>0.2mm) | ea/ 3.3m$^2$ | 11 | 7 | 20 | 32 | 210 | >500 | 4 | 38 |
| | | Judgement | - | Good | Good | Good | Good | Acceptable | Bad | Good | Good |
| *Difficult in molding | | | | | | | | | | | |

[Fabrication of Heat-shrinkable Film]

For the production of the heat-shrinkable film, 50 mass% of the resin composition (DP) described in Example 4 of Japanese Patent No. 6000939 was dry-blended with respect to 50 mass% of the pellets of the block copolymers P1 to P8, and the composition melt-blended at 200°C using a single-screw extruder was used. As Comparative Example 9, the heat-shrinkable film was also produced using only pellets of DP.

A biaxial stretching device by the T-die method was used to fabricate heat-shrinkable films for various measurements and evaluations. Pellets of the above-described block copolymer composition were extruded and molded into sheets with a thickness of approximately 0.3 mm at a temperature of 210°C by a sheet extruder equipped with a T-die, and stretched 1.1 times in the flow direction (MD) at 85°C by a longitudinal stretching machine at a line speed of 10 m/min. Thereafter, the sheets were stretched 4.5 times in the direction perpendicular to the flow direction (TD) at 95°C by a transverse stretching machine to fabricate heat-shrinkable films with an average thickness of approximately 50 um, which were taken as Examples 5 to 8 and Comparative Examples 5 to 9. It should be noted that, in Comparative Example 2, molding into the film using pellets of the block copolymer P6 was attempted but cannot be achieved.

The fabricated heat-shrinkable films were analyzed and evaluated as follows.

<Measurement of Heat Shrinkage Rate>

The heat shrinkage rate of the film was measured by the following method.

(1) From the heat-shrinkable film, a test piece with an MD width of 100 mm and a TD width of 100 mm was cut.
(2) This test piece was completely immersed in warm water at 80°C or 100°C for 10 s. Thereafter, it was removed, and the water was thoroughly wiped off to measure the TD length L (mm).
(3) The heat shrinkage rate was calculated by the following formula.

$$\text{Heat shrinkage rate (\%)} = \{(100-L)/100\} \times 100$$

<Measurement of Tensile Elongation>

Tensile elongation of the film was measured by the following method.

(1) From the heat-shrinkable film, a rectangular test piece with a MD width of 200 mm and a TD width of 10 mm was cut.
(2) Using a Tensilon universal material testing machine made by ORIENTEC CO., LTD., the test piece cut was subjected to tension in the MD direction at a measuring temperature of 23°C and at a tensile speed of 200 mm/min to measure the tensile elongation.

<Measurement of Natural Shrinkage Rate>

The natural shrinkage rate of the heat-shrinkable film was measured by the following method.

(1) A test piece with a MD width of 100 mm and a TD width of 350 mm was cut from the heat-shrinkable film.
(2) Reference lines were placed in the center part of the test piece so that the interval of the TD reference lines became 300 mm, and the test piece was stored in an environmental testing machine at 40°C. The interval of the reference lines N (mm) was measured after 7 days of storage.
(3) The natural shrinkage rate was measured by the following formula.

$$\text{Natural shrinkage rate (\%)} = \{(300-N)/300\} \times 100$$

<Measurement of Impact Strength>

The impact strength of the heat-shrinkable film was measured in accordance with ASTM D3420 using an impact tester (made by TESTER SANGYO CO,.LTD.) and an R25 tip.

<Fisheye Level>

The fisheye level of the heat-shrinkable film was measured by cutting out 22 pieces of film, each with a width of 50 cm in the MD direction and a width of 30 cm in the TD direction, from the stretched film, and visually counting the number of fisheyes having a major diameter of 0.2 mm or more using a loupe with a scale. The number of fisheyes per 3.3 m$^2$ was judged as "Bad" when the number is 300 or more, "Acceptable" when the number is 50 or more and less than 300, and "Good" when the number is less than 50.

[Table 2]

Table 2

|  |  |  |  | Example |  |  |  | Comparative Example |  |  |  |  |
|---|---|---|---|---|---|---|---|---|---|---|---|---|
|  |  |  |  | 5 | 6 | 7 | 8 | 5 | 6 | 7 | 8 | 9 |
| Composition of Composition | No. of Block Copolymer |  | - | P1 | P2 | P3 | P4 | P5 | P6 | P7 | P8 | - |
|  | Ratio of Above-described Block Copolymer in Composition |  | mass% | 50 | 50 | 50 | 50 | 50 | 50 | 50 | 50 | 0 |
| Physical Property of Heat-Shrinkable Film | Heat Shrinkage Rate | 80°C ×10 s | % | 37 | 39 | 42 | 41 | 26 | - | 41 | 30 | 51 |
|  |  | 100°C ×10 s | % | 67 | 68 | 68 | 71 | 66 | - | 73 | 70 | 77 |
|  | Natural Shrinkage Rate | 40°C ×7 | % | 5.1 | 5.3 | 7.0 | 4.6 | 1.8 | - | 2.1 | 2.3 | 1.6 |
|  | Tensile Elongation |  | % | >440 | >440 | >440 | 390 | 330 | - | 370 | 310 | 260 |
|  | Impact Strength |  | kJ/m | 21 | 20 | 21 | 22 | 15 | - | 13 | 14 | 10 |
|  | Fisheye Level | Number of Foreign Substances (>0.2mm) | ea/3.3m² | 14 | 11 | 21 | 30 | 160 | - | 9 | 35 | 10 |
|  |  | Judgement | - | Good | Good | Good | Good | Acceptable | - | Good | Good | Good |

*Film Forming Impossible

**Claims**

1. A block copolymer having a first vinyl aromatic block (S1), a second vinyl aromatic block (S2), and a copolymerization block (B/S), wherein:

   the first vinyl aromatic block (S1) is substantially composed exclusively of a vinyl aromatic monomer unit;
   the second vinyl aromatic block (S2) is substantially composed exclusively of the vinyl aromatic monomer unit;
   a weight average molecular weight of the second vinyl aromatic block (S2) is equal to or less than a weight average molecular weight of the first vinyl aromatic block (S1);
   the copolymerization block (B/S) is substantially composed exclusively of the vinyl aromatic monomer unit and a conjugated diene monomer unit;
   a content ratio of the conjugated diene monomer unit in the copolymerization block is 55 mass% or more and 82 mass% or less;
   a ratio of the first vinyl aromatic block (S1) is 50 mass% or more and 85 mass% or less when a total of masses of the first vinyl aromatic block (S1) and the second vinyl aromatic block (S2) is taken as 100 mass%;
   a content ratio of the copolymerization block in the block copolymer is 38 mass% or more and 60 mass% or less; and
   the block copolymer has at least one peak of a loss tangent value (tan$\delta$) in a range of -70 to -35°C when a dynamic viscoelasticity measurement is performed under conditions of a temperature increase rate of 4°C/min, a frequency of 1 Hz, and a strain of 0.02% in accordance with ISO6721-1.

2. The block copolymer of Claim 1, wherein the weight average molecular weight of the first vinyl aromatic block (S1) is 30000 or more and 100000 or less.

3. The block copolymer of Claim 1 or 2, wherein a ratio of the vinyl aromatic monomer unit in the block copolymer is 64 mass% or more and 75 mass% or less when a total mass of the vinyl aromatic monomer unit and the conjugated diene monomer unit is taken as 100 mass%.

4. The block copolymer of any one of Claims 1 to 3, wherein the copolymerization block (B/S) is a random copolymerization block of the vinyl aromatic monomer unit and the conjugated diene monomer unit.

5. The block copolymer of any one of Claims 1 to 4, wherein:

   the block copolymer is linear-chain; and
   an arrangement of polymerization blocks is (S1)-(B/S)-(S2) or (S2)-(B/S)-(S1).

6. A composition containing the block copolymer of any one of Claims 1 to 5, wherein the composition further contains a polymer different from the block copolymer.

7. The composition of Claim 6, wherein a content ratio of the block copolymer is 15 mass% or more and 85 mass% or less.

8. A heat-shrinkable film comprising a layer constituted of the composition of Claim 6 or 7.

9. A sheet comprising a layer constituted of the composition of Claim 6 or 7.

10. A molded article obtained by molding the sheet of Claim 9.

## INTERNATIONAL SEARCH REPORT

| International application No. |
| --- |
| **PCT/JP2022/012791** |

### A. CLASSIFICATION OF SUBJECT MATTER

***C08F 297/04***(2006.01)i; ***C08L 53/00***(2006.01)i
FI: C08F297/04; C08L53/00

According to International Patent Classification (IPC) or to both national classification and IPC

### B. FIELDS SEARCHED

Minimum documentation searched (classification system followed by classification symbols)

C08F297/04; C08L53/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | JP 2011-094073 A (ASAHI KASEI CHEMICALS CORP.) 12 May 2011 (2011-05-12) claims, paragraphs [0007], [0015], [0016], [0023], [0024], [0030], [0036], [0046], [0058], [0101]-[0127], fig. 1 | 1-10 |
| X | JP 2010-235666 A (ASAHI KASEI CHEMICALS CORP.) 21 October 2010 (2010-10-21) paragraphs [0077], [0090], [0117] | 1, 3-10 |
| X | JP 2010-174166 A (ASAHI KASEI CHEMICALS CORP.) 12 August 2010 (2010-08-12) claims, paragraphs [0014]-[0021], [0032], [0059]-[0076] | 1-7, 9-10 |
| A | JP 2005-105048 A (DENKI KAGAKU KOGYO K.K.) 21 April 2005 (2005-04-21) entire text | 1-10 |

☐ Further documents are listed in the continuation of Box C.  ☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **17 May 2022** | **31 May 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
**Information on patent family members**

International application No.

**PCT/JP2022/012791**

| Patent document cited in search report | | | Publication date (day/month/year) | Patent family member(s) | Publication date (day/month/year) |
|---|---|---|---|---|---|
| JP | 2011-094073 | A | 12 May 2011 | (Family: none) | |
| JP | 2010-235666 | A | 21 October 2010 | (Family: none) | |
| JP | 2010-174166 | A | 12 August 2010 | (Family: none) | |
| JP | 2005-105048 | A | 21 April 2005 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP HEI11158241 A

- JP 6000939 B

**Non-patent literature cited in the description**

- **Y. TANAKA.** *RUBBER CHEMISTRY AND TECH-NOLOGY,* 1985, 16